# FASCICULE DE BREVET EUROPEEN

(11) **EP 0 694 429 B1**
(45) Date de publication et mention de la délivrance du brevet: **06.05.1999**
(21) Numéro de dépôt: 95401744.8
(22) Date de dépôt: 24.07.1995
(51) Int. Cl.: B60J 10/04, B60J 10/06, B60J 1/17

(54) **Vitre latérale à position réglable en hauteur pour véhicules**
Seitenscheibe mit hohenverstellbarer Position für Kraftfahrzeuge
Side window with height position adjuster for vehicles

(30) Priorité: 28.07.1994 DE 4426744
(43) Date de publication de la demande: 31.01.1996
(73) Titulaire: SAINT-GOBAIN VITRAGE, 92400 Courbevoie (FR)
(72) Inventeur: von Alpen, Ulrich, Dr., D-52078 Aachen (DE); Timmermann, Alwin, Dr., D-50933 Köln (DE)
(74) Mandataire: Breton, Jean-Claude

(56) Documents cités:
- EP-A- 0 209 423
- EP-A- 0 489 537
- DE-A- 3 617 602
- DE-A- 4 124 505
- FR-A- 2 633 660
- FR-A- 2 649 749
- US-A- 4 962 601

## Description

La présente invention concerne une vitre latérale à position réglable en hauteur pour véhicules.

Les vitres latérales à position réglable en hauteur, telles qu'elles sont en général disposées dans les portes des véhicules, sont reliées à un mécanisme de levage à l'intérieur du logement aménagé dans le caisson de la porte et supportées par des glissières. Les vitres sont calfeutrées à l'arête supérieure de la cloison externe du caisson de la porte par un profilé d'étanchéité de caoutchouc élastique, complété en général par une moulure. Ce profilé ferme l'espace existant entre la cloison externe du caisson et la vitre et assure la parfaite étanchéité du logement aménagé à l'intérieur de la porte contre l'eau pénétrant par la partie supérieure. Le procédé selon lequel on peut disposer un joint d'étanchéité en caoutchouc élastique à la bordure supérieure de la cloison interne du caisson, afin de réaliser l'isolation acoustique de l'interstice délimité lorsque la fenêtre est en position fermée, est également bien connu (DE 39 35 629 A1).

Pour des raisons de tolérances de fabrication, la largeur de l'interstice entre l'arête supérieure de la cloison externe métallique du caisson et la vitre est toujours au moins égale à quelques millimètres. Il est ainsi possible de pénétrer à l'intérieur du logement de la vitre en introduisant par la partie supérieure un outil mince, comme par exemple un fil métallique rigide, entre le profilé et la vitre et d'actionner par exemple le mécanisme permettant l'ouverture de la porte.

La demande de brevet européen EP-A-0 489 537 propose une solution en disposant un profilé collé sur la vitre du côté extérieur qui en position haute vient au contact d'une gouttière métallique montée souple qui contient un joint à lèvre, le joint à lèvre venant alors en appui sur la vitre.

L'objet de l'invention est de fabriquer une vitre latérale pour véhicule dans son logement et réglable en hauteur grâce à laquelle la possibilité de pénétration par effraction dans le logement de la vitre au moyen d'un outil introduit entre cette dernière et la cloison externe du caisson est fortement réduite ou complètement éliminée, le coût de fabrication de la fenêtre devant par ailleurs rester le plus faible possible.

Le problème technique est résolu selon l'invention en réalisant une vitre latérale pour véhicule dans son logement et réglable en hauteur, du type divulgué dans EP-A-0 489 537, dans lequel le profilé est disposé sur la vitre par extrusion d'un polymère et est en appui sur la tôle de la cloison externe du logement lorsque la vitre est en position fermée.

La fabrication du profilé extrudé et son collage simultané sur la vitre de voiture s'effectuent sur celle-ci selon l'invention au moyen du procédé bien connu de l'extrusion, grâce auquel un polymère extrudable est par exemple extrudé et appliqué sur la vitre, tel qu'il est décrit dans l'EP-A-0524092. L'utilisation de ce procédé permet ainsi de fixer le profilé extrudé immédiatement après la fabrication de la vitre, sur le lieu de fabrication de cette dernière, ce qui favorise une production particulièrement économique de l'ensemble. Une configuration appropriée de la buse d'extrusion permet d'adapter facilement la section du profilé extrudé aux exigences spécifiques du cas particulier. Par exemple, cette section peut prendre la forme d'un triangle comportant un angle aigu orienté vers le haut, de sorte que l'outil introduit vers la face du profil inclinée vers l'extérieur soit dévié vers la cloison externe du caisson de la porte.

Selon une forme de réalisation fonctionnelle de l'invention, le profilé extrudé présente une section essentiellement en U, et la cavité en forme de canal ainsi créée est orientée vers le haut. Ainsi, l'outil introduit par la partie supérieure du logement de la porte, qui est en règle générale un fil métallique, sera dévié en atteignant le fond du canal et recourbé, de sorte qu'une intrusion dans le logement de la vitre à l'intérieur du caisson sera gênée ou totalement exclue.

La conception selon l'invention de la fenêtre augmente non seulement la sécurité du véhicule contre les effractions, mais elle permet aussi d'obtenir une nette amélioration de son insonorisation. En effet, d'une part la fermeture de l'interstice entre la vitre et la cloison externe du caisson entraîne une diminution de la transmission du bruit aérien. D'autre part, le couplage mécanique entre la vitre et la cloison externe du caisson amortit les vibrations propres du système, de sorte que la transmission du bruit des structures est nettement abaissée.

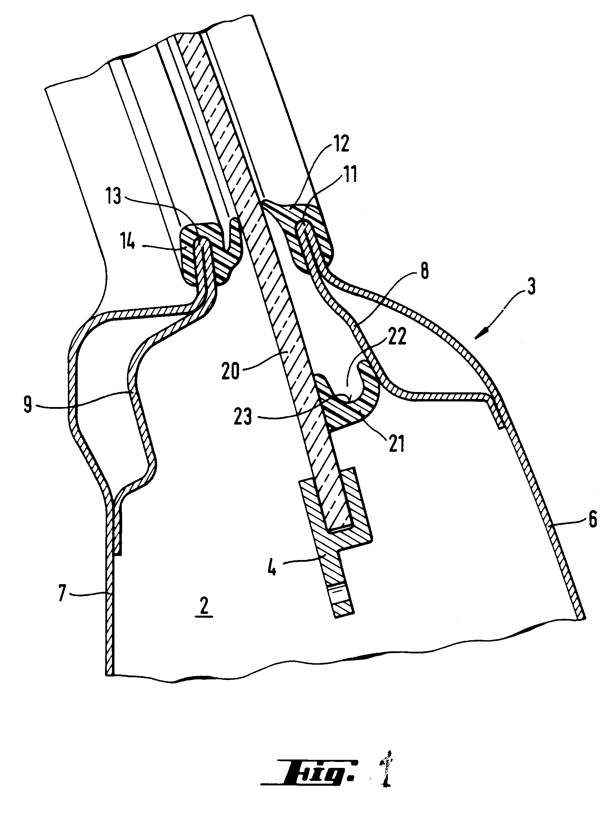

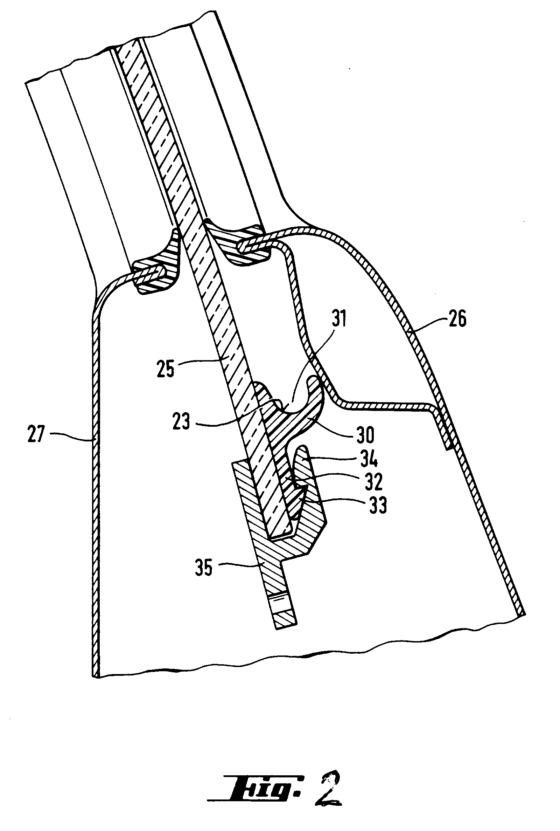

D'autres avantages, configurations et perfectionnements de l'invention apparaîtront à la lecture des sous-revendications et de la description ci-après de différents exemples de réalisation, au moyen des dessins. Dans ces derniers, on peut voir sous la forme d'une coupe de la partie supérieure du caisson de la porte :
dans **la Fig.1** : une forme de réalisation de l'invention avec un profilé extrudé creusé d'une cavité formant un canal, et
dans **la Fig. 2** : une autre forme de réalisation dans laquelle le profilé prend en charge une fonction supplémentaire.

Dans la forme de réalisation représentée à la Fig. 1, la vitre 20 escamotable de la porte de la voiture doit être considérée comme une glace monolithique. Mais il peut s'agir également d'un verte multicouches, c'est-à-dire d'un verte feuilleté. La vitre 20 est disposée de manière appropriée sur un support pour être mobile dans le sens de sa hauteur et peut être abaissée dans son logement 2 aménagé dans le caisson de la porte 3. A la bordure inférieure de la vitre 20, une partie profilée 4 a été fixée, sur laquelle agit le mécanisme de levée de la vitre, non représenté sur le dessin, et placé à l'intérieur du logement 2.

Le caisson de la porte 3 se constitue d'une cloison externe 6 et d'une cloison interne 7. A sa partie supérieure, les cloisons 6 et 7 sont chacune renforcées par des pièces de forme supplémentaires 8 et 9 formant un caisson. Un profilé d'étanchéité 12 composé d'un matériau en caoutchouc élastique est disposé à l'arête supérieure 11 de la cloison externe 6. De même, un profilé d'étanchéité 14 est placé à l'arête supérieure 13 de la cloison interne 7, qui limite l'ouverture de la fenêtre.

A la partie inférieure de la vitre 20, un profilé extrudé 21 est appliqué par extrusion sur la face de cette dernière en rapport avec la cloison externe 6. Ce profilé 21 est positionné sur la vitre de manière à se trouver à une hauteur de quelques centimètres en-dessous de l'arête 11 de la cloison externe lorsque la fenêtre est fermée. Le profilé extrudé 21, a une section en U, dont l'ouverture est orientée vers le haut. De cette manière, on obtient un profil en forme de canal dont la section interne est en demi-rond, et l'âme externe 22 du profilé extrudé 21 s'appuie contre la pièce de forme en tôle 8 du caisson. Dans cette forme de réalisation, un fil métallique introduit dans le logement entre le joint d'étanchéité 12 et la vitre 20 est non seulement dévié, mais il poursuit sa progression le long de la surface 23 arrondie en se recourbant de manière continue, ce qui entraîne en quelque sorte son enroulement sur lui-même au fond de la structure. L'intrusion dans le logement est ainsi rendu impossible.

Dans la forme de réalisation du profité extrudé 21 représentée dans la **Fig. 1**, celui-ci qui est en forme de canal peut en outre remplir une fonction de récupération de l'eau qui pénètre par la partie supérieure de la fenêtre dans le logement. Par conséquent, l'eau est méthodiquement maintenue à l'écart des éléments mécaniques sensibles à l'humidité à l'intérieur du logement de la vitre. Il est dans ce cas utile de disposer le profité extrudé 21 creusé en canal avec une légère inclinaison par rapport à l'horizontale, de sorte que l'eau puisse être ainsi canalisée dans la direction dans laquelle elle gêne moins à sa sortie du canal.

La **Fig. 2** représente un profité extrudé qui remplit une autre fonction supplémentaire. Il s'agit également ici d'une vitre 25 dont la disposition à l'intérieur du caisson de la porte comportant une cloison externe 26 et une cloison interne 27 est escamotable. La face de la vitre tournée vers la cloison externe 26 est munie par extrusion et application d'un profité extrudé 30, celui-ci présentant de nouveau ici une section supérieure 31 en forme de canal, dont la conception est identique ou semblable à celle du profité extrudé 21 précédemment décrit. Cependant, dans le cas présent, le profilé extrudé 30 est complété par une âme inférieure 32. Cette âme inférieure 32 est munie d'une saillie d'ancrage 33, ou le cas échéant de plusieurs saillies d'ancrage de ce type. L'effet de cette saillie d'ancrage 33 se combine avec celui d'une autre saillie d'ancrage 34 de forme adaptée d'un profilé de serrage 35 et assure la jonction par emboîtement entre le profilé de serrage 35 et le profilé extrudé 30, et donc entre le profit de serrage 35 et la vitre 25. De cette manière, toute mesure supplémentaire pour la fixation du profilé 35 devient superflue. Le simple glissement de ce dernier permet ainsi une jonction solide et durable avec la vitre 25, ce qui ne peut être obtenu en général que par des mesures supplémentaires, comme la mise en place d'alésages et de vis ou la disposition d'un assemblage collé supplémentaire.

Indépendamment de sa conception, le profité extrudé et fixé peut en outre être muni d'un joint à lèvre élastiquement déformable, qui s'appuie contre la cloison externe du caisson de la porte lorsque la vitre est en position de fermeture et assure ainsi une bonne étanchéité contre la pénétration de l'eau et une bonne isolation sonore.

Le profité extrudé peut se constituer à partir d'un système chimique quelconque, qui se laisse déformer par extrusion, adhère à la surface du verte et dont le temps de durcissement est relativement court. Pour des applications comparables, les systèmes à polyuréthannes durcissant à l'humidité et les systèmes à polyuréthanes à deux composants, qui sont extrudés et fixés à la vitre après prétraitement correspondant de la surface du verte, se sont avérés efficaces. De tels systèmes à polyuréthanes sont par exemple décrits dans l'US-A-3779794 et dans l'EP-A-0083797 et EP-A-0024501. Cependant, de manière particulièrement fonctionnelle, le profité extrudé est fabriqué à partir d'un polymère thermoplastique extrudable, tel qu'il est décrit dans l'EP-A-0 524 092. Dans ce cas, la vitre doit indiquer une température de 80 à 150°C lors de l'extrusion et de l'application du profilé. Une technique adéquate consiste à effectuer l'extrusion et la fixation du profilé extrudé immédiatement après la fabrication des vitres, lorsque celles-ci sont encore à la température appropriée liée à l'opération précédente de courbure et'ou de précontrainte.

## Revendications

1. Vitre latérale pour véhicule dans son logement et réglable en hauteur, comprenant un profilé (21, 30) disposé sur la vitre (20, 25), la section et la position dudit profilé (21, 30) sur la vitre sont telles que, lorsque la vitre est en position fermée, le profilé (21, 30) est en appui sur la paroi externe du logement de la vitre de sorte que des outils introduits par la partie supérieure de la cloison externe du logement soient déviés ou que l'intrusion de ces outils dans le logement de la vitre soit totalement neutralisée, **caractérisée en ce que** le profilé (21, 30) est disposé sur la vitre (20, 25) par extrusion d'un polymère et est en appui sur la tôle de la cloison externe du logement lorsque la vitre est en position fermée.

2. Vitre latérale à position réglable en hauteur selon la revendication 1, **caractérisée en ce** que le profilé extrudé (21) présente une section essentiellement en forme de U, sa cavité en forme de canal étant orientée vers le haut.

3. Vitre à position réglable en hauteur selon l'une des revendications 1 ou 2, **caractérisée en ce que** le profilé extrudé est muni d'un joint à lèvre appliqué contre la cloison externe du caisson lorsque la fenêtre est en position fermée.

4. Vitre à position réglable en hauteur selon la revendication 2 ou la revendication 3, **caractérisée en ce que** le profilé extrudé est disposé sur la vitre avec une inclinaison par rapport à l'horizontale et dévie ainsi dans une direction choisie l'eau pénétrant dans l'interstice entre la vitre et l'arête supérieure de la cloison externe du caisson.

5. Vitre à position réglable en hauteur selon l'une des revendications 1 à 4, **caractérisée en ce qu'**une âme (32) dont le parcours est identique à celui du profilé extrudé (30) est disposée contre ce dernier, **ou en ce qu'**un autre profilé extrudé, parallèle au premier, est appliqué contre la vitre par extrusion, **et que** l'âme (32) ou le second profité extrudé munis de saillies de fixation pour l'immobilisation par serrage d'un ou plusieurs éléments de fixation (35) sont prévus pour le couplage d'un mécanisme de levage de la vitre.

## Claims

1. Side window for vehicle in its housing and which is height-adjustable, comprising a profiled section (21, 30) placed on the window pane (20, 25), the cross-section and position of said profiled section (21, 30) on the window pane being such that when the window is in the closed position the profiled section (21, 30) bears on the outer wall of the housing of the window, so that tools introduced by the upper part of the outer partition of the housing are deflected or the intrusion of these tools in the window housing is completely neutralised, **characterized in that** the profiled section (21, 30) is placed on the window pane (20,25) by the extrusion of a polymer and bears on the bodywork of the outer partition of the housing when the window is in the closed position.

2. Height-adjustable side window according to claim 1, **characterized in that** the extruded profiled section (21) has an essentially U-shaped cross-section, its channel-shaped cavity being oriented upwards.

3. Height-adjustable window according to one of the claims 1 or 2 **characterized in that** the extruded profiled section is provided with a lip seal applied to the outer partition of the housing when the window is in the closed position.

4. Height-adjustable window according to claim 2 or 3, **characterized in that** the extruded profiled section is placed on the window pane with an inclination with respect to the horizontal and consequently deflects in a determined direction the water penetrating the gap between the window pane and the upper edge of the outer partition of the housing.

5. Height-adjustable window according to one of the claims 1 to 4, **characterized in that** a web (32), whose course is identical to that of the extruded profiled section (30), is placed against the latter, or in that another extruded profiled section, parallel to the first, is applied against the window pane by extrusion, and that the web (32) or the second extruded profiled section equipped with fixing projections for the immobilization by locking of one or more fixing elements (35) are provided for the coupling of a window lifting mechanism.

## Patentansprüche

1. Höhenverstellbare Seitenfensterscheibe für Kraftfahrzeuge in ihrem Fensterschacht, umfassend ein Profil (21, 30), das auf der Fensterscheibe (20, 25) mit einem solchen Querschnitt und in einer solchen Position angeordnet ist, daß es sich bei geschlossener Fensterscheibe an der Außenwand des Fensterschachts derart abstützt, daß von der Oberseite der Außenwand eingeführte Werkzeuge abgelenkt werden oder daß das Eindringen dieser Werkzeuge in den Fensterschacht gänzlich verhindert wird, **dadurch gekennzeichnet**, daß das Profil (21, 30) auf der Scheibe (20, 25) durch Extrusion eines Polymers angeordnet ist und sich in der Schließstellung der Scheibe gegen das Blech der Außenwand des Schachts anlegt.

2. Höhenverstellbare Seitenfensterscheibe nach Anspruch 1, **dadurch gekennzeichnet**, daß der Profilstrang (21) einen im wesentlichen U-förmigen Querschnitt aufweist, dessen kanalartige Vertiefung nach oben gerichtet ist.

3. Höhenverstellbare Seitenfensterscheibe nach einem der Ansprüche 1 oder 2, **dadurch gekennzeichnet**, daß der Profilstrang mit einer sich in der Schließstellung des Fensters an die Außenwand anlegenden Dichtlippe versehen ist.

4. Höhenverstellbare Seitenfensterscheibe nach Anspruch 2 oder 3, **dadurch gekennzeichnet**, daß der Profilstrang auf der Glasscheibe mit einer Neigung zur Horizontalen angeordnet ist und so durch den Spalt zwischen Glasscheibe und Oberkante der Außenwand eindringendes Wasser in einer gewünschten Richtung ableitet.

5. Höhenverstellbare Seitenfensterscheibe nach einem der Ansprüche 1 bis 4, **dadurch gekennzeichnet**, daß an dem Profilstrang (30) ein in Richtung des Profilstrangs (30) verlaufender Steg (32) angeordnet, oder parallel zu dem Profilstrang ein weiterer Profilstrang durch Anextrudieren mit der Glasscheibe verbunden ist, und daß der Steg (32) oder der weitere Profilstrang mit Befestigungsvorsprüngen für die Klemmbefestigung eines oder mehrerer Befestigungselemente (35) für die Ankopplung eines Türhebemechanismus vorgesehen ist.
